# EUROPÄISCHE PATENTSCHRIFT

(11) **EP 1 541 803 B1**
(45) Veröffentlichungstag und Bekanntmachung des Hinweises auf die Patenterteilung: **13.10.2010**
(21) Anmeldenummer: 04090471.6
(22) Anmeldetag: 29.11.2004
(51) Int. Cl.: F01D 3/00, F01D 5/08, F01D 3/04

(54) **Gasturbine, umfassend eine Anordnung zur Lagerentlastung**
Gas turbine comprising a bearing relief arrangement
Turbine à gaz comprenant un agencement de soulagement des paliers

(30) Priorität: 11.12.2003 DE 10358625
(43) Veröffentlichungstag der Anmeldung: 15.06.2005
(73) Patentinhaber: Rolls-Royce Deutschland Ltd & Co KG, 15827 Dahlewitz (DE)
(72) Erfinder: Friedl, Winfried-Hagen, Dipl.-Ing., 12305 Berlin (DE)
(74) Vertreter: Wablat, Wolfgang

(56) Entgegenhaltungen:
- EP-A- 1 219 777
- DE-A1- 1 601 554
- US-A- 4 697 981
- US-A- 6 067 791
- PATENT ABSTRACTS OF JAPAN Bd. 009, Nr. 330 (M-442), 25. Dezember 1985 (1985-12-25) & JP 60 162002 A (MITSUBISHI JUKOGYO KK), 23. August 1985 (1985-08-23)
- PATENT ABSTRACTS OF JAPAN Bd. 012, Nr. 183 (M-703), 28. Mai 1988 (1988-05-28) & JP 62 294701 A (HITACHI LTD), 22. Dezember 1987 (1987-12-22)

## Beschreibung

Die Erfindung betrifft eine Gasturbine, umfassend eine Anordnung zur Lagerentlastung zur Verminderung der am Hochdrucklager wirkenden axialen Kräfte, mit zwischen Verdichter und Hochdruckturbine entlang der Hochdruckwelle ausgebildeter, mit Verdichterluft versorgter Schaufelkühlkammer.

Bei Fluggasturbinen erzeugt bekanntermaßen der Verdichter eine Last in Flugrichtung, während die von der Turbine ausgehende Last in entgegengesetzter Richtung wirkt. Bei der Hochdruckwelle einer Fluggasturbine ist üblicherweise die Verdichterlast größer als die Turbinenlast. Auf das jeweilige Festlager (Hochdrucklager) wirkt dann die Differenz zwischen den beiderseitigen Kräften. Die Belastung des Festlagers ist umso größer, je mehr die vom Verdichter und der Turbine ausgehenden Kräfte voneinander abweichen. Mit der weiteren Entwicklung der Gasturbinen in Bezug auf höhere Leistungen steigen auch die Prozessdrücke, Temperaturen und die Drehzahlen und letztlich auch die auf das Hochdrucklager wirkenden axialen Belastungen. Die bekannten Vollmetalllager stoßen wegen der hohen zentrifugalen Kräfte an Drehzahlgrenzen. Die bekannten Hybridlager sind zwar bei höheren Drehzahlen einsetzbar, können jedoch keine höheren Lasten aufnehmen. Die mit der gestiegenen Lagerbelastung verbundenen Lagerprobleme erfordern kürzere Wartungsintervalle bzw. die Lebensdauer der Lager wird verringert. Der weiteren Erhöhung der Leistungsdichte der Gasturbinen sind damit enge Grenzen gesetzt.

Aus dem Bereich der stationären Gasturbinen ist das Problem des Lagerlastausgleichs insbesondere aus der Leistungsturbine bekannt. Bei von Fluggasturbinen abgeleiteten stationären Gasturbinen fehlt auf der Niederdruckwelle die vorwärtsgerichtete Kraft des Bläsers. Deshalb werden die Gasturbinen mit zusätzlichen Einrichtungen versehen, die den Lagerlastausgleich bewerkstelligen. Diese Einrichtungen können sich dabei außerhalb der Gasturbine befinden, was auf der Hochdruckwelle nicht ohne weiteres möglich ist.

Aus dem Patent Abstracts of Japan, Bd. 009, Nr. 330 (M-442), 25. Dezember 1985 & JP 60 162002 A (Mitsubishi Jukogyo KK), 23. August 1985 ist die Verringerung der Druckaufnahmefläche eines Axialschub-Lagers durch Verbinden des Raums an der Rückseite des Kompressorimpellers mit der Atmosphäre über ein Regelventil, Verbinden des Raums an der dem Kompressor zugewandten Seite der Turbinenscheibe mit der Entladeseite des Kompressors über ein Regelventil und Verbinden des Raums an der Seite der Scheibe, die dem Kompressor gegenüberliegt mit einer Gasaustrittsöffnung über ein Regelventil bekannt.

Die US-A-4697981 beschreibt eine Anwendung zum Ausgleich des Axialschubs eines Turbinen- und Kompressorrotors zur Vermeidung von Belastungsänderungen bei Axiallagern, bei der gleiche Flächen des Kompressors und der Turbine mit der Kühlluft beaufschlagt werden.

Bei einer aus der US 5 735 66 bekannten Industriegasturbine erfolgt die Reduzierung der auf das Niederdrucklager wirkenden Belastung durch nur außerhalb der stationären Gasturbine mögliche bauliche Maßnahmen. Bei einer Fluggasturbine sind derartige - außerhalb liegende - bauliche Veränderungen nicht möglich.

Die US 4 864 810 beschreibt ein im Inneren einer Industriegasturbine vorgesehenes Dampfkolben-Ausgleichsystem zur Verminderung der auf ein Axiallager wirkenden Verdichterkräfte. Um die auf das Festlager wirkende axialen Rückwärtskraft zumindest teilweise zu vermindern, ist innerhalb der Gasturbine eine mit Dampf versorgte Druckkammer vorgesehen, die eine mit dem Lager verbundene und mit diesem rotierende Innenfläche aufweist. Eine auf die Innenfläche aufgebrachte axiale Vorwärtsdruckkraft wird somit auf das Festlager übertragen, um dieses zu entlasten. Diese Art der Lagerlastreduzierung ist insofern nachteilig, als sie die konstruktive Ausbildung einer Druckkammer und die Bereitstellung einer Hochdruckdampfquelle zur regelbaren Beaufschlagung der mit dem Festlager rotierenden Innenfläche der Druckkammer erfordert.

Der Erfindung liegt die Aufgabe zugrunde, eine im Innern einer Gasturbine vorgesehene Anordnung zur Reduzierung der vom Verdichter und von der Turbine auf ein Festlager ausgeübten Differenzkraft anzugeben, die einfach ausgebildet ist und eine kontrollierte Lagerentlastung ermöglicht.

Erfindungsgemäß wird die Aufgabe mit einer gemäß den Merkmalen des Patentanspruchs 1 ausgebildeten Gasturbine gelöst. Aus den Unteransprüchen ergeben sich weitere Merkmale und vorteilhafte Weiterbildungen der Erfindung.

Der Grundgedanke der Erfindung besteht darin, dass ausgehend von der in Flugrichtung (Vorwärtsrichtung) erzeugten Last des Verdichters und der entgegen der Flugrichtung (Rückwärtsrichtung) von der Turbine erzeugten Last mit Hilfe einer verringerten Druckwirkung der Verdichterluft auf der Rückseite des Verdichters der Hochdruckwelle und einer erhöhten Druckwirkung der Verdichterluft an der Turbine bzw. Turbinenscheibe die auf das Festlager der Hochdruckwelle wirkende resultierende Last verringert wird und somit Lager eingesetzt werden können, die hohe Drehzahlen ermöglichen, wobei dennoch eine lange Lebensdauer dieser Lager gewährleistet ist.

Die Einstellung des Niedrigdruckes bzw. des Hochdruckes erfolgt mit einer an der Rückseite des Verdichters im Bereich des Antriebskonus (drive cone) der Hochdruckwelle ausgebildeten, gegen den Verdichterluftdruck abgeschirmten Niedrigdruckkammer bzw. einer an der Vorderseite der Turbine angeordneten, mit Verdichterdruckluft versorgten Hochdruckkammer. Die Begrenzung der Hochdruck- und der Niedrigdruckkammer gegenüber der Hochdruckwelle erfolgt mit Dichtungen.

Eine kontrollierte Einstellung des Niedrigdruckes bzw. des Hochdruckes in den entsprechenden Kammern erfolgt zum Teil über die Dichtwirkung der Bürstendichtungen sowie über die Drosselwirkung Öffnungsquerschnitte von Luftaustrittsöffnungen in der Niedrigdruckammer und im Niedrigdruckbereich hinter den Leitschaufeln der Turbine bzw. bei der Hochdruckkammer durch die Größe der Lufteintrittsbohrungen für die vom Verdichter zugeführte Luft. Im Rahmen der kontrollierten Einstellbarkeit des jeweiligen Druckes kann auch die Lagerlast kontrolliert eingestellt werden.

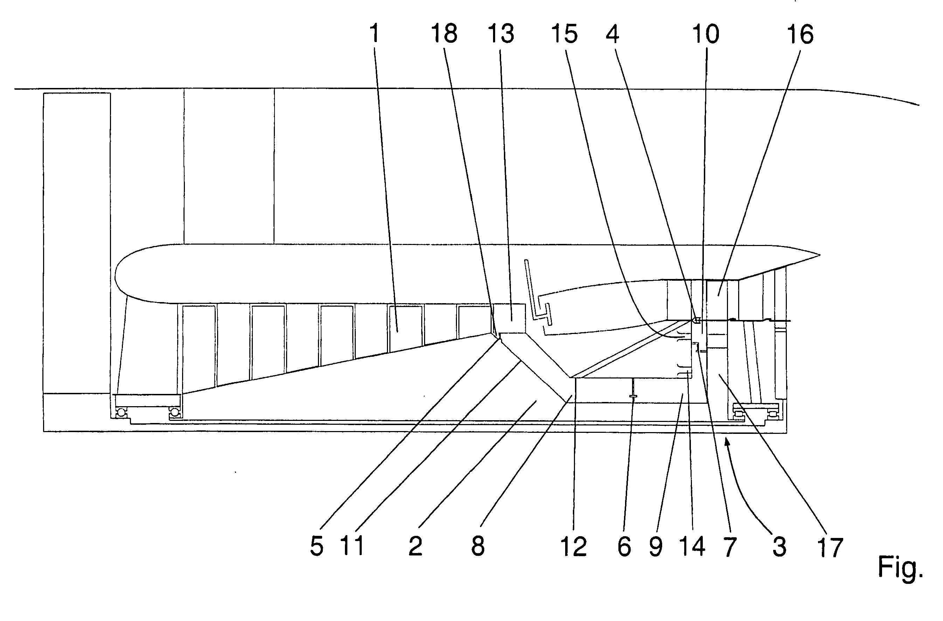

Ein Ausführungsbeispiel der Erfindung wird anhand der Zeichnung, in deren einziger Figur eine Teilansicht einer Fluggasturbine im Bereich der Hochdruckwelle zwischen Verdichter und Hochdruckturbine und der dort befindlichen Kammer zur Kühlung der Turbinenschaufeln wiedergegeben ist, näher erläutert.

Die anhand der Zeichnung beschriebene Ausführungsform geht von der zuvor getroffenen Feststellung aus, dass die vom Verdichter 1 in Vorwärtsrichtung auf das Festlager (nicht dargestellt) der Hochdruckwelle 2 gerichtete Axialkraft üblicherweise größer als die in Rückwärtsrichtung gerichtete Axialkraft der Hochdruckturbine 3 ist und die Differenz aus diesen Drücken die auf das Festlager wirkende resultierende Kraft und damit die Größe der Lagerbelastung bestimmt. Durch Erhöhung des an der Turbine auf die Hochdruckwelle wirkenden Druckes und/oder Verminderung des am Verdichter auf die Hochdruckwelle wirkenden Druckes und der daraus resultierenden reduzierten Kräfte kann die Belastung des Festlagers der Hochdruckwelle deutlich verringert werden, um zum einen die Drehzahl erhöhen zu können und andererseits ein lange Lebensdauer des Lagers zu erreichen.

Die dem Verdichter 1 nachgeschaltete und an der Hochdruckturbine 3 durch eine Labyrinthdichtung 4 begrenzte Kammer zur Bereitstellung der zum Kühlen der Turbinenschaufeln 16 erforderlichen, vom Verdichter 1 erzeugten Kühlluft ist durch Anordnung einer an den Verdichter 1 anschließenden ersten Bürstendichtung 5 sowie einer zweiten und dritten Bürstendichtung 6 und 7 in eine Niedrigdruckkammer 8 zwischen der ersten und zweiten Bürstendichtung 5 und 6, in eine Hochdruckkammer 9 zwischen der zweiten und dritten Bürstendichtung 6 und 7 sowie in die eigentliche Schaufelkühlkammer 10 zwischen der dritten Bürstendichtung 7 und der Labyrinthdichtung 4 aufgeteilt. Der in der Niederdruckkammer 8 herrschende Druck wird zum einen durch die Dichtwirkung der Bürstendichtungen 5 und 6 und zum anderen durch die Größe der Luftaustrittsöffnungen 12 in der Niederdruckkammer 8 oberhalb der zweiten Bürstendichtung 6 bzw. die Drosselfläche in dem Bereich niedrigen Druckes hinter den Leitschaufeln der Hochdruckturbine, mit dem die Niederdruckkammer 8 verbunden ist, bestimmt. Der volle Verdichteraustrittsdruck wirkt lediglich in dem kleinen Raum 18 vor der ersten Bürstendichtung 5. Durch die Reduzierung des Druckes im Wesentlichen über die ganze Länge des Antriebskonus 11, das heißt, die Ausbildung einer durch die Bürstendichtungen 5 und 6 abgetrennten Niederdruckkammer 8 in diesem Bereich, wird somit die vom Verdichter 1 ausgehende vorwärts gerichtete Axialkraft reduziert und damit auch die auf das Festlager wirkende Differenz aus der Verdichterlast und der Turbinenlast verringert.

Eine weitere Verringerung der auf das Festlager der Hochdruckwelle 2 wirkenden Last wird mit einer Erhöhung der von der Hochdruckturbine ausgehenden, rückwärts gerichtegerichteten Kraft in der Weise erzielt, dass mit der zwischen zweiter und dritter Bürstendichtung 6 und 7 gebildeten Hochdruckkammer 9 ein erhöhter Druck an der Hochdruckturbine 3, das heißt, an der Turbinenscheibe 17, anliegt. Zu diesem Zweck wird ein Teil der vom Verdichter 1 komprimierten, über einen Diffusor 13 ausgetragenen Luft - an der Niederdruckkammer 8 vorbei und getrennt von der aus dieser austretenden Luft - über Lufteintrittsbohrungen 14 in die Hochdruckkammer 9 eingetragen. Dadurch wird die Kraft, die die Hochdruckturbine 3 nach hinten schiebt größer und damit der auf das Festlager wirkende Differenzbetrag aus der vorwärts gerichteten Verdichterlast und der rückwärts gerichteten Turbinenlast weiter verringert. Die Höhe des in der Hochdruckkammer 9 wirkenden Druckes wird durch die Größe des Durchmessers der Lufteintrittsbohrungen 14 bestimmt.

Die zwischen der dritten Bürstendichtung 7 und der Labyrinthdichtung 4 gebildete Schaufelkühlkammer 10 wird über eine Öffnung 15 mit Verdichterluft versorgt, um von da aus die Turbinenschaufeln 16 zu kühlen.

Durch die kontrollierte Einstellung eines bestimmten Niederdruckes bzw. eines bestimmten Hochdruckes in der Nieder- bzw. Hochdruckkammer 8, 9 kann die Verdichterlast regelbar reduziert und die Turbinenlast regelbar erhöht werden und letztlich die auf das Festlager der Hochdruckwelle wirkende resultierende Last optimal verringert werden. Die Einstellung des Druckes in der Hoch- und der Niederdruckkammer erfolgt zum einen über die Dichtwirkung der Bürstendichtungen 5 bis 7 und zum anderen über die Größe der mit einem Niedrigdruckbereich verbundenen Luftaustrittsöffnungen 12 in der Niedrigdruckkammer 8 und der Größe der luftaustrittsseitigen Drosselfläche im Niederdruckbereich hinter den Leitschaufeln der Turbine sowie zum anderen über die Größe der Lufteintrittsbohrungen 14 in der Hochdruckkammer 9.

Die Erfindung ist nicht auf das zuvor beschriebene Ausführungsbeispiel beschränkt. Im Rahmen des Grundgedankens der Erfindung sind zweckmäßige Ausgestaltungen denkbar. Beispielsweise können die Dichtungen, die die Hoch- und die Niedrigdruckkammer begrenzen, als Labyrinthdichtungen oder als Karbondichtungen ausgebildet sein. Die Niedrigdruckkammer könnte auch mit dem Nebenstromkanal eines Mantelstromtriebwerks oder mit der Kammer zwischen Hoch- und Niedrigdruckwelle verbunden sein.

### Bezugszeichenliste

- 1: Verdichter
- 2: Hochdruckwelle
- 3: Hochdruckturbine
- 4: Labyrinthdichtung
- 5: Erste Bürstendichtung
- 6: Zweite Bürstendichtung
- 7: Dritte Bürstendichtung
- 8: 8 Niedrigdruckkammer
- 9: Hochdruckkammer
- 10: Schaufelkühlkammer
- 11: Antriebskonus (drive cone)
- 12: Luftaustrittsöffnungen in 8
- 13: Hauptgaskanal/Diffusor
- 14: Lufteintrittsbohrungen in 9
- 15: Öffnung in Schaufelkühlkammer
- 16: Turbinenschaufel
- 17: Turbinenscheibe
- 18: Raum vor der ersten Bürstendichtung

## Patentansprüche

1. Gasturbine, umfassend eine Anordnung zur Lagerentlastung zur Verminderung der am Hochdrucklager wirkenden Kräfte, mit zwischen Verdichter (1) und Hochdruckturbine (3) entlang der Hochdruckwelle (2) ausgebildeter, mit Verdichterluft versorgter Schaufelkühlkammer (10), **dadurch gekennzeichnet, dass** der Schaufelkühlkammer (10) an der Rückseite des Verdichters (1) eine Niedrigdruckkammer (8) zur Lastminderung am Verdichter (1) und an der Vorderseite der Hochdruckturbine (3) eine Hochdruckkammer (9) zur Lasterhöhung an der Turbine vorgeschaltet sind, die gegenüber der Hochdruckwelle (2) durch Dichtungen (5 bis 7) begrenzt sind, wobei die Niedrigdruckkammer (8) über Luftaustrittsöffnungen (12) mit einem Niedrigdruckbereich hinter den Leitschaufeln der Hochdruckturbine (3) verbunden ist und die Hochdruckkammer (9) mit Verdichterluft versorgte Lufteintrittsöffnungen (14) aufweist.

2. Gasturbine nach Anspruch 1, **dadurch gekennzeichnet, dass** die die Niedrig- und Hochdruckkammer (8, 9) begrenzenden Dichtungen als Bürstendichtungen (5, 6, 7) ausgebildet sind.

3. Gasturbine nach Anspruch 1, **dadurch gekennzeichnet, dass** die Größe der Luftaustrittsöffnungen (12) und/oder des Luftaustrittsquerschnitts im Niedrigdruckbereich hinter den Leitschaufeln zur Druckeinstellung in der Niedrigdruckkammer (8) und zur Lasteinstellung am Verdichter (1) variabel ist.

4. Gasturbine nach Anspruch 1, **dadurch gekennzeichnet, dass** die Größe der Lufteintrittsbohrungen (14) zur Einstellung des Druckes in der Hochdruckkammer (9) und zur Lasteinstellung an der Hochdruckturbine (3) variabel ist.

5. Gasturbine nach Anspruch 1, **dadurch gekennzeichnet, dass** die Niedrigdruckkammer (8) im Wesentlichen im Bereich des Antriebskonus (11) der Hochdruckwelle (2) angeordnet ist.

6. Gasturbine nach Anspruch 1, **dadurch gekennzeichnet, dass** die Hochdruckkammer (9) im Wesentlichen im Bereich der Turbinenscheibe (17) ausgebildet ist.

7. Gasturbine nach Anspruch 1, **dadurch gekennzeichnet, dass** die die Niedrig- und Hochdruckkammer (8, 9) begrenzenden Dichtungen (5 bis 7) als Labyrinthdichtungen ausgebildet sind

8. Gasturbine nach Anspruch 1, **dadurch gekennzeichnet, dass** die die Niedrig- und Hochdruckkammer (8, 9) begrenzenden Dichtungen (5 bis 7) als Karbondichtungen ausgebildet sind

9. Gasturbine nach Anspruch 1, **dadurch gekennzeichnet, dass** die Niedrigdruckkammer (8) mit dem Nebenstromkanal eines Mantelstromtriebwerks verbunden ist.

10. Gasturbine nach Anspruch 1, **dadurch gekennzeichnet, dass** die Niedrigdruckkammer (8) mit der Kammer zwischen Hoch- und Niederdruckwelle verbunden ist.

## Claims

1. Gas turbine including a bearing relief arrangement for reducing the forces acting upon the high-pressure bearing, with a blade cooling chamber (10) supplied by compressor air being provided between the compressor (1) and the high-pressure turbine (3) along the high-pressure shaft (2), **characterized in that** at the rear side of the compressor (1) a low-pressure chamber (8) for reducing the load at the compressor (1) and at the front side of the high-pressure turbine (3) a high-pressure chamber (9) for increasing the load at the turbine are placed upstream of the blade cooling chamber (10), with the low-pressure chamber (8) and the high-pressure chamber (9) being separated from the high-pressure shaft (2) by sealings (5 to 7), with the low-pressure chamber (8) being connected to a low-pressure zone behind the stator vanes of the high-pressure turbine (3) via air exit openings (12) and with the high-pressure chamber (9) featuring air entry openings (14) supplied by compressor air.

2. Gas turbine in accordance with Claim 1, **characterized in that** the sealings delimiting the low-pressure and the high-pressure chambers (8, 9) are of the brush sealing type (5, 6, 7).

3. Gas turbine in accordance with Claim 1, **characterized in that** the size of the air exit openings (12) and/or the air exit cross-section in the low-pressure zone behind the stator vanes for setting the pressure in the low-pressure chamber (8) and for setting the load at the compressor (1) is variable.

4. Gas turbine in accordance with Claim 1, **characterized in that** the size of the air entry openings (14) for setting the pressure in the high-pressure chamber (9) and for setting the load at the high-pressure turbine (3) is variable.

5. Gas turbine in accordance with Claim 1, **characterized in that** the low-pressure chamber (8) is essentially arranged in the area of the drive cone of the high-pressure shaft (2).

6. Gas turbine in accordance with Claim 1, **characterized in that** the high-pressure chamber (9) is essentially provided in the area of the turbine disk (17).

7. Gas turbine in accordance with Claim 1, **characterized in that** the sealings (5 to 7) delimiting the low-pressure and the high-pressure chambers (8, 9) are of the labyrinth sealing type.

8. Gas turbine in accordance with Claim 1, **characterized in that** the sealings (5 to 7) delimiting the low-pressure and the high-pressure chambers (8, 9) are of the carbon sealing type.

9. Gas turbine in accordance with Claim 1, **characterized in that** the low-pressure chamber (8) is connected to the bypass duct of a bypass engine.

10. Gas turbine in accordance with Claim 1, **characterized in that** the low-pressure chamber (8) is connected to the chamber between the high-pressure and the low-pressure shaft.

## Revendications

1. Turbine à gaz, comprenant une structure de déchargement de palier destinée à atténuer les forces agissant sur le palier haute pression, avec une chambre de refroidissement des aubes (10) formée entre le compresseur (1) et la turbine haute pression (3) le long de l'arbre haute pression (2) et alimentée par l'air du compresseur, **caractérisée en ce qu'**en amont de la chambre de refroidissement des aubes (10) sont placées sur la face arrière du compresseur (1) une chambre basse pression (8) pour réduire la charge sur le compresseur (1) et sur la face avant de la turbine haute pression (3) une chambre haute pression (9) pour augmenter la charge sur la turbine, et qui sont délimitées par rapport à l'arbre haute pression (2) par des joints d'étanchéité (5 à 7), sachant que la chambre basse pression (8) est reliée par des orifices de sortie d'air (12) à une zone basse pression derrière les aubes directrices de la turbine haute pression (3), et que la chambre haute pression (9) présente des orifices d'entrée d'air (14) alimentés par l'air du compresseur.

2. Turbine à gaz selon la revendication n° 1, **caractérisée en ce que** les joints d'étanchéité délimitant les chambres basse et haute pression (8, 9) sont formés par des joints brosses (5, 6, 7).

3. Turbine à gaz selon la revendication n° 1, **caractérisée en ce que** la taille des orifices de sortie d'air (12) et/ou de la section transversale de sortie d'air dans la zone basse pression derrière les aubes directrices est variable afin de régler la pression dans la chambre basse pression (8) et de régler la charge sur le compresseur (1).

4. Turbine à gaz selon la revendication n° 1, **caractérisée en ce que** la taille des orifices d'entrée d'air (14) este variable afin de régler la pression dans la chambre haute pression (9) et de régler la charge sur la turbine haute pression (3).

5. Turbine à gaz selon la revendication n° 1, **caractérisée en ce que** la chambre basse pression (8) est pour l'essentiel disposée dans la zone du cône d'entraînement de l'arbre haute pression (2).

6. Turbine à gaz selon la revendication n° 1, **caractérisée en ce que** la chambre haute pression (9) est pour l'essentiel disposée dans la zone du disque de turbine (17).

7. Turbine à gaz selon la revendication n° 1, **caractérisée en ce que** les joints d'étanchéité (5 à 7) délimitant les chambres basse et haute pression (8, 9) sont formés par des garnitures en labyrinthe.

8. Turbine à gaz selon la revendication n° 1, **caractérisée en ce que** les joints d'étanchéité (5 à 7) délimitant les chambres basse et haute pression (8, 9) sont formés par des garnitures de carbone.

9. Turbine à gaz selon la revendication n° 1, **caractérisée en ce que** la chambre basse pression (8) est reliée au canal de flux secondaire d'un moteur à double flux.

10. Turbine à gaz selon la revendication n° 1, **caractérisée en ce que** la chambre basse pression (8) est reliée à la chambre entre l'arbre haute pression et l'arbre basse pression.
